# EUROPÄISCHE PATENTSCHRIFT

(11) **EP 3 286 554 B1**
(45) Veröffentlichungstag und Bekanntmachung des Hinweises auf die Patenterteilung: **27.02.2019**
(21) Anmeldenummer: 16720065.8
(22) Anmeldetag: 19.04.2016
(51) Int. Cl.: G01N 23/04, B25J 19/00, B25J 21/00

(54) **BILDAUFNAHMEVORRICHTUNG ZUM AUTOMATISCHEN ERSTELLEN EINES COMPUTERTOMOGRAFISCHEN ABBILDS VON EINEM BAUTEIL, VERFAHREN ZUM BETRIEB EINER BILDAUFNAHMEVORRICHTUNG UND INLINE-BAUTEILPRÜFANLAGE MIT EINER BILDAUFNAHMEVORRICHTUNG**
IMAGE RECORDING APPARATUS FOR AUTOMATICALLY GENERATING A COMPUTED TOMOGRAPHIC IMAGE OF A COMPONENT, METHOD FOR OPERATING AN IMAGE RECORDING APPARATUS AND IN-LINE COMPONENT TESTING SYSTEM COMPRISING AN IMAGE RECORDING APPARATUS
DISPOSITIF D'IMAGERIE POUR L'ÉLABORATION AUTOMATIQUE D'UNE IMAGE TOMODENSITOMÉTRIQUE D'UN COMPOSANT, PROCÉDÉ PERMETTANT DE LE FAIRE FONCTIONNER ET INSTALLATION DE CONTRÔLE DES COMPOSANTS EN LIGNE COMPRENANT UN TEL DISPOSITIF

(30) Priorität: 24.04.2015 DE 102015207598
(43) Veröffentlichungstag der Anmeldung: 28.02.2018
(73) Patentinhaber: Fraunhofer-Gesellschaft zur Förderung der angewandten Forschung e.V., 80686 München (DE)
(72) Erfinder: EBERHORN, Markus, 91056 Erlangen (DE); LUXA, Maik, 91056 Erlangen (DE); STOCKER, Thomas, 90766 Fürth (DE); ABT, Christian, 73054 Eislingen (DE)
(74) Vertreter: Stöckeler, Ferdinand
(86) Internationale Anmeldenummer: PCT/EP2016/058660
(87) Internationale Veröffentlichungsnummer: WO 2016/169930

(56) Entgegenhaltungen:
- EP-A1- 1 462 215
- EP-A1- 2 746 753
- DE-A1- 2 056 300
- DE-A1-102011 112 692
- JP-A- 2007 147 313
- US-A- 3 846 632

## Beschreibung

Die folgende Erfindung bezieht sich auf eine Bildaufnahmevorrichtung zum automatischen Erstellen eines computertomografischen Abbilds von einem Bauteil und einem Verfahren zum Betrieb der Bildaufnahmevorrichtung. Ferner wird eine Inline-Bauteilprüfanlage mit einer Bildaufnahmevorrichtung beschrieben. Ausführungsbeispiele zeigen ein Boxed Inline CT (Computertomograph) mit Handlingsystem.

Ein Anwendungsgebiet ist beispielsweise die wiederholende Bauteilprüfung mittels 3D Röntgencomputertomographie (3D-CT) in der Produktion bzw. produktionsbegleitend mittels Handlingsystem (z.B. Roboter oder Achsen).

Aktuell auf den Markt erhältliche industrielle 3D-CT Systeme sind neben einer Strahlenschutzkabine, einer Strahlungsquelle und einem Detektorsystem mit einem Manipulationssystem zum Bauteilhandling für die Messdatenerfassung ausgestattet. Zusätzliche Einrichtungen wie z.B. Industrieroboter werden hier nur als Bestückungssystem verwendet und während der Messdatenerfassung nicht bewegt. Inline 3D-CT Systeme, insbesondere Systeme die direkt in der Produktion oder produktionsbegleitend zur Qualitätsprüfung eingesetzt werden, sind meist in ihren Freiheitsgraden bezüglich der Bauteilmanipulation eingeschränkt und darüber hinaus mit einem Be- und Entladesystem für die zu messenden Bauteile ausgestattet. Be- und Entladesysteme sind typischerweise Industrieroboter oder Förderbänder, die auch ein manuelles Be- und Entladen durch das Personal erlauben. Dabei steht der komplette Aufbau zur Messdatenerfassung in einer Strahlenschutzkabine, welche eine automatische Türöffnung oder ein Labyrinth bzw. einen Tunnel für das Zu- und Ausfördern besitzt, so dass keine schädliche Röntgenstrahlung aus der Kabine austritt. Das Dokument EP 2 746 753 A1 offenbart ein solches 3D-CT System.

Die Bildaufnahme erfolgt entweder in schrittweiser oder kontinuierlicher Bewegung der für die Messdatenerfassung notwendigen Achsen des Manipulationssystems. Kann das Bauteil nicht in einem Messdatenerfassungszyklus erfasst werden, meist aufgrund seiner Größe, muss das Aufnahmesystem oder das Bauteil neu positioniert werden. Wenn das Manipulationssystem nicht mit den notwendigen Freiheitsgraden ausgestattet ist, muss das Objekt durch das Be- und Entladesysteme ausgefördert und in seiner neuen Orientierung erneut zugeführt werden. Dieser Prozess muss solange wiederholt werden bis alle Objektbereiche erfasst wurden.

Inline 3D-CT Systeme werden dabei so ausgelegt, dass eine flexible Bauteilprüfung mit möglichst hoher Taktrate erreicht werden soll. Die Zeitdauer für das Bauteilhandling bzw. das Be- und Entladen trägt derzeit einen überproportionalen Anteil zur Taktzeit bei.

Der vorliegenden Erfindung liegt somit die Aufgabe zugrunde, ein verbessertes Konzept zum computertomografischen Abbilden von Bauteilen zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele zeigen eine Bildaufnahmevorrichtung zum automatischen Erstellen eines computertomografischen Abbilds von einem Bauteil. Die Bildaufnahmevorrichtung umfasst eine Strahlungsquelle, die ausgebildet ist, elektromagnetische Strahlung auszusenden, wobei die elektromagnetische Strahlung einen Strahlungsweg aufweist, der das Bauteil oder zumindest einen Teil des Bauteils und einen Strahlungsdetektor umfasst. Die Bildaufnahmevorrichtung weist ferner den Strahlungsdetektor auf, der ausgebildet ist, die elektromagnetische Strahlung der Strahlungsquelle zu empfangen und das Abbild des Bauteils oder das Abbild des Teils des Bauteils, der sich im Strahlungsweg befindet, zu detektieren. Die Strahlungsquelle und der Strahlungsdetektor sind in einer Strahlenschutzkabine angeordnet, die ausgebildet ist, die elektromagnetische Strahlung innerhalb der Strahlenschutzkabine von der Außenwelt abzuschirmen. Ferner umfasst die Bildaufnahmevorrichtung einen Roboter, der außerhalb der Strahlenschutzkabine angeordnet ist, wobei ein Roboterarm des Roboters ausgebildet ist, das Bauteil durch eine Öffnung in der Strahlenschutzkabine in die Strahlenschutzkabine zu führen. Eine Strahlenaustrittsverhinderungseinrichtung ist ausgebildet, ein Austreten von Strahlung durch die Öffnung zu verhindern, wenn das Bauteil von dem Roboterarm durch die Öffnung in die Strahlenschutzkabine geführt ist.

Der vorliegenden Erfindung liegt die Idee zugrunde, dass ein Roboter, der ein Bauteil durch eine Öffnung in der Strahlenschutzkabine führt, eine höhere Taktrate für die Bauteilprüfung ermöglicht und eine preiswertere Fertigung der Bildaufnahmevorrichtung bzw. eines Inline 3D-CT ermöglicht. Die schnelleren Taktzeiten können erreicht werden, indem das Bauteil von dem Roboterarm nur einmal außerhalb der Strahlenschutzkabine gegriffen wird, das Bauteil während der Herstellung eines computertomografischen Abbilds am Roboterarm verbleibt und nach dem Erstellen des Abbilds von dem Bauteil außerhalb der Strahlenschutzkabine abgesetzt wird. Somit entfällt eine Übergabekette des Bauteils von einer Bauteilzuführung an einen Bauteilmanipulator, der in der Strahlenschutzkabine angeordnet ist und von dem Bauteilmanipulator an eine Bauteilentnahme.

In Ausführungsbeispielen kann der Roboterarm die Positionierung, beispielsweise eine Rotation des Bauteils während der computertomografischen Aufnahme des Bauteils durchführen. Die Öffnung kann darüber hinaus beispielsweise in eine Führung eingebettet sein, so dass das Bauteil in einer beliebigen Entfernung von der Strahlungsquelle und dem Strahlungsdetektor sowie, bei einer gewählten Entfernung parallel zum Strahlungsdetektor verschoben werden kann. Eine Annäherung des Bauteils an die Strahlungsquelle ermöglicht das Abbilden des Bauteils mit zunehmender Vergrößerung, da durch die auf den Strahlungsdetektor auftreffende elektromagnetischen Strahlung erzeugte Abbildung des Bauteils oder eines Bereichs des Bauteils geometrisch vergrößert wird. Eine Verschiebung des Bauteils parallel zum Strahlungsdetektor ermöglicht es ein virtuell breiteres Detektorsystem zu schaffen. Dies kann für Objekte bzw. Bauteile hilfreich sein, die größer als der Strahlungsdetektor sind. Somit kann aus einer Kombination von unterschiedlichen computertomografischen Aufnahmen eines Bauteils an unterschiedlichen Positionen vor dem Strahlungsdetektor ein Gesamtbild erzeugt werden, welches ein Bauteil, das größer als der Strahlungsdetektor ist, vollständig abbildet. Darüber hinaus ist es auch möglich, mit einer einzigen computertomographischen Abbildung ein Gesamtbild von einem Bauteil zu erstellen, das größer ist als die Detektorfläche des Strahlungsdetektors. Hierzu können spezielle Rekonstruktionsverfahren verwendet werden. Ebenso kann eine Fixierung des Roboterarms eine exaktere Positionierung gewährleisten, beispielsweise wenn das Bauteil von dem Roboterarm während der Erstellung des computertomographischen Abbilds rotiert wird. Durch eine geringere Abweichung des Bauteils von seiner ursprünglichen Position, wird so eine höhere Detailerkennbarkeit des computertomographischen Abbilds erreicht. Als ein computertomographisches Abbild wird ferner eine Mehrzahl von Einzelaufnahmen angesehen, die mittels bekannter Technologien zu dem computertomographischen Abbild kombiniert werden.

Ausführungsbeispiele zeigen den Roboterarm, der ausgebildet ist, das Bauteil für die Dauer des Erstellens eines computertomografischen Abbilds an einer vorbestimmten Position in dem Strahlungsweg zu positionieren. Dies ist vorteilhaft, wenn beispielsweise eine rotierenden Anordnung der Strahlungsquelle und des Strahlungsdetektors (z.B. ein Gantry Computertomograph) eingesetzt wird.

Weitere Ausführungsbeispiele beschreiben die Ausbildung der Strahlenaustrittsverhinderungseinrichtung. Diese kann am Roboter angeordnet sein, so dass die Öffnung der Strahlenschutzkabine verschlossen wird, wenn das Bauteil von dem Roboterarm in die Strahlenschutzkabine geführt ist. Alternativ kann die Öffnung die Strahlenaustrittsverhinderungseinrichtung aufweisen, indem beispielsweise ein Strahlenschutztunnel an der Öffnung angeordnet ist, der die elektromagnetische Strahlung innerhalb der Strahlenschutzkabine von der Außenwelt abschirmt. Ein weiteres Ausführungsbeispiel zeigt, dass die Öffnung den Roboterarm während des Betriebs der Strahlungsquelle hermetisch umschließt, wodurch die Strahlenaustrittsverhinderungseinrichtung geformt wird, um die elektromagnetische Strahlung innerhalb der Strahlenschutzkabine von der Außenwelt abzuschirmen. Die beschriebenen Strahlenaustrittsverhinderungseinrichtungen sind vorteilhaft, da diese keinen zusätzlichen Zeitaufwand benötigt, um die Strahlenschutzkabine nach dem Zuführen des Bauteils durch den Roboterarm zu verschließen.

Ausführungsbeispiele zeigen ferner den Roboterarm, der ausgebildet ist, das Bauteil rotatorisch in dem Strahlungsweg der elektromagnetischen Strahlung zu bewegen. Dies ist vorteilhaft, wenn eine starre Anordnung der Strahlungsquelle und des Strahlungsdetektors verwendet wird, um die nötigen Röntgenbilder aus verschiedenen Orientierungen des Bauteils für die Berechnung der computertomografischen Aufnahme zu erzeugen. Diese Anordnung kann preiswerter ausgeführt werden, im Vergleich zu einer sich drehenden Anordnung der Strahlungsquelle und des Strahlungsdetektors, wie sie bereits in einem vorherigen Ausführungsbeispiel beschrieben wurde.

Weitere Ausführungsbeispiele zeigen die Öffnung der Strahlenschutzkabine und den Roboterarm mit einem Fixierungsmechanismus, der ausgebildet ist, die Öffnung und den Roboterarm mechanisch miteinander zu verbinden. Beispielhafte Fixierungsmechanismen arbeiten elektrisch, magnetisch, mittels Druckluft oder mit einer beliebigen Kombination der Wirkmechanismen. Der Fixierungsmechanismus ist vorteilhaft, da das Bauteil am Roboterarm eine höhere Positionstreue aufweisen kann, z.B. wenn das Bauteil durch den Roboterarm bei der Erzeugung der computertomografischen Abbildungen rotiert wird. Somit kann eine höhere Auflösung des computertomographischen Abbilds realisiert werden. Ein "Verschmieren" von Bildpunkten durch eine unbeabsichtigte, translatorische Bewegung des Bauteils kann somit reduziert werden.

Weitere Ausführungsbeispiele zeigen die Bildaufnahmevorrichtung mit einer Führung, durch die die Öffnung der Strahlenschutzkabine entlang einer Achse zwischen der Strahlungsquelle und dem Strahlungsdetektor oder senkrecht zu der Achse zwischen der Strahlungsquelle und dem Strahlungsdetektor durch den Roboterarm mit einem separaten Antrieb verschiebbar ist. Durch die Verschiebung bzw. die Anordnung des Bauteils an unterschiedlichen Stellen bzw. Positionen zwischen der Strahlungsquelle und dem Strahlungsdetektor wird eine computertomografische Abbildung des Bauteils in unterschiedlichen Vergrößerungen ermöglicht. Darüber hinaus kann auch eine Verbesserung der Auflösung erreicht werden, wenn die Abbildung des Bauteils auf dem Strahlungsdetektor die Fläche des Strahlungsdetektors besser ausnutzt. Eine Verschiebung des Bauteils in der Ebene des Strahlungsdetektors ermöglicht die Schaffung eines virtuell breiteren Detektorsystems. So können beispielsweise Bauteile, die größer sind als der Strahlungsdetektor durch eine Kombination von mehreren computertomografischen Abbildungen des Bauteils an unterschiedlichen Positionen, in einem computertomografisches Gesamtbild des Bauteils abgebildet werden, das größer sein kann, als die zur Detektion der elektromagnetischen Strahlung zur Verfügung stehende Fläche des Strahlungsdetektors.

Weitere Ausführungsbeispiele zeigen die Bildaufnahmevorrichtung mit einem Wegmesssystem, das ausgebildet ist, eine Position des Bauteils am Roboterarm exakt zu bestimmen. Das Wegmesssystem kann mit dem Roboterarm oder mit einem separaten Antrieb, der den Roboterarm führt, gekoppelt sein. Darüber hinaus kann die Bildaufnahmevorrichtung eine Steuereinheit aufweisen, die ausgebildet ist, den Antrieb basierend auf einer Wegmessung des Wegmesssystems zu steuern und das Bauteil exakt in der Strahlenschutzkabine zu positionieren. Dies ist vorteilhaft, da so preisgünstigere und weniger präzise Roboter zur Bestückung der Strahlenschutzkabine eingesetzt werden können, da über das Wegmesssystem eine Kontrolle der aktuellen Position des Bauteils und darüber hinaus eine Regelung der aktuellen Position des Bauteils über die Steuereinheit durchgeführt werden kann. Wie bereits beschrieben resultiert eine höhere Präzision bei der Positionierung des Bauteils direkt in eine Verbesserung der Auflösung der computertomographischen Abbildung.

Alternativ oder ergänzend kann die exakt bestimmte Position der Bauteils an dem Roboterarm auch einen Positionsfehler, beispielsweise durch einen Vergleich mit einer vorbestimmten Position des Bauteils, an die Rekonstruktion übergeben werden und den Positionsfehler bei der Erstellung des computertomographischen Abbilds mathematisch herauszurechnen. Dazu kann die Bildaufnahmevorrichtung einen Signalprozessor aufweisen, der ausgebildet ist, eine Mehrzahl von mit dem Strahlungsdetektor detektierten Abbildern des Bauteils oder eine Mehrzahl von Abbildern eines Teils des Bauteils, der sich im Strahlungsweg befindet zu erhalten und das computertomographische Abbild des Bauteils zu erstellen. Ferner kann der Signalprozessor ausgebildet sein, basierend auf einer Wegmessung des Wegmesssystems die Position des Bauteils während der Detektion der Mehrzahl der Abbilder des Bauteils oder der Mehrzahl von Abbildern eines Teils des Bauteils, der sich im Strahlungsweg befindet, zu erhalten und mit einer vorbestimmten Position des Bauteils oder des Teils des Bauteils, der sich im Strahlungsweg befindet, zu vergleichen. Der Signalprozessor kann somit das computertomographische Abbild des Bauteils unter Berücksichtigung des Vergleichs und einer möglichen Abweichung der ermittelten Position zu der vorbestimmten Position erstellen.

Gemäß Ausführungsbeispielen kann die Strahlungsquelle zur computertomografischen Abbildung des Bauteils Röntgenstrahlung oder Gammastrahlung aussenden. Ferner kann die Bildaufnahmevorrichtung einen Bildverarbeitungsprozessor aufweisen, der ausgebildet ist, Störstellen in dem Bauteil basierend auf dem computertomografischen Abbild des Bauteils zu erkennen und anzuzeigen.

Ausführungsbeispiele zeigen ferner eine Inline-Bauteilprüfanlage mit einer Bildaufnahmevorrichtung. Die Inline-Bauteilprüfanlage weist eine Zuführeinrichtung auf, die ausgebildet ist, die Bauteile der Bildaufnahmevorrichtung zuzuführen. Somit kann die Bildaufnahmevorrichtung ein computertomografisches Abbild von einer Mehrzahl von Bauteilen sequenziell und automatisiert erstellen.

Ausführungsbeispiele zeigen ferner ein Verfahren zum Betrieb der Bildaufnahmevorrichtung zum automatischen Erstellen eines computertomografischen Abbilds von einem Bauteil.

Bevorzugte Ausführungsbeispiele der vorliegenden Anmeldung werden nachfolgend Bezug nehmend auf die beiliegenden Zeichnungen näher erläutert. Es zeigen:
- Fig. 1: eine schematische Darstellung der Bildaufnahmevorrichtung;
- Fig. 2: eine schematische Darstellung einer Bildaufnahmevorrichtung mit einem Strahlenschutztunnel und einer alternativen Ausführung des Roboters;
- Fig. 3a: eine schematische Darstellung des Roboterarms und der Öffnung, wobei der Roboterarm die Öffnung hermetisch verschließt;
- Fig. 3b: eine schematische Darstellung einer alternativen Öffnungsvariante, wobei die Öffnung eine einstellbare Größe aufweist;
- Fig. 3c: eine schematische Darstellung eines weiteren Ausführungsbeispiels mit einem Kragen um die Öffnung zu verschließen;
- Fig. 3d: eine schematische Darstellung eines weiteren Ausführungsbeispiel mit einem Zwischenflansch am Roboterarm um die Öffnung zu verschließen;
- Fig. 3e,f: eine schematische Darstellung eines weiteren Ausführungsbeispiels mit einer Kuppel, die die Öffnung aufweist, wobei eine Abdeckvorrichtung am Roboterarm die Öffnung verschließen kann;
- Fig. 4a-c: eine schematische Darstellung der Bildaufnahmevorrichtung, wobei die Öffnung in eine Führung integriert ist;
- Fig. 5: eine schematische Darstellung der Bildaufnahmevorrichtung mit einem Fixierungsmechanismus am Roboterarm und der Öffnung;
- Fig. 6: eine schematische Darstellung eines Flussdiagramms für ein Verfahren zum Betrieb einer Bildaufnahmevorrichtung zum automatischen Erstellen eines computertomografischen Abbilds von einem Bauteil.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

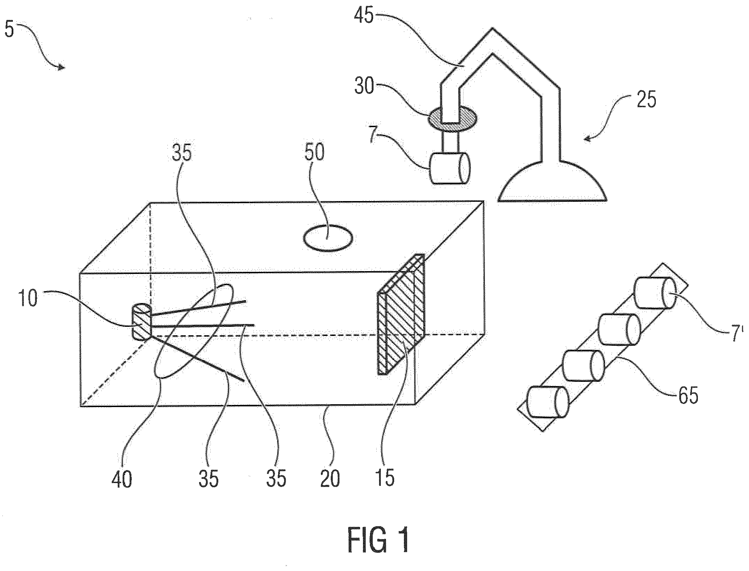

Fig. 1 zeigt eine schematische Darstellung einer Bildaufnahmevorrichtung 5 zum automatischen Erstellen eines computertomografischen Abbilds von einem Bauteil 7. Die Bildaufnahmevorrichtung 5 weist eine Strahlungsquelle 10, einen Strahlungsdetektor 15, eine Strahlenschutzkabine 20, einen Roboter 25 sowie eine Strahlenaustrittsverhinderungseinrichtung 30 auf. Die Strahlungsquelle 10 kann im Betrieb der Bildaufnahmevorrichtung elektromagnetische Strahlung 35 aussenden, die einen Strahlungsweg 40 aufweist, der im Betrieb das Bauteil 7 oder zumindest einen Teil des Bauteils 7 und den Strahlungsdetektor 15 umfasst. Der Strahlungsdetektor 15 ist ausgebildet, die elektromagnetische Strahlung 35 der Strahlungsquelle zu empfangen und das Abbild des Bauteils 7 oder das Abbild des Teils des Bauteils 7, der sich im Strahlungsweg 40 befindet, zu detektieren. Die Strahlenschutzkabine 20 umfasst die Strahlungsquelle 10 und den Strahlungsdetektor 15 und ist ausgebildet, die elektromagnetische Strahlung 35 innerhalb der Strahlenschutzkabine 20 von der Außenwelt abzuschirmen. Der Roboter 25 ist außerhalb der Strahlenschutzkabine 20 angeordnet, wobei ein Roboterarm 45 des Roboters 25 ausgebildet ist, das Bauteil 7 durch eine Öffnung 50 in der Strahlenschutzkabine 20 in die Strahlenschutzkabine zu führen. Die Strahlenaustrittsverhinderungseinrichtung 30 verhindert ein Austreten von Strahlung 35 durch die Öffnung 50, wenn das Bauteil von dem Roboterarm durch die Öffnung 50 in die Strahlenschutzkabine 20 geführt ist.

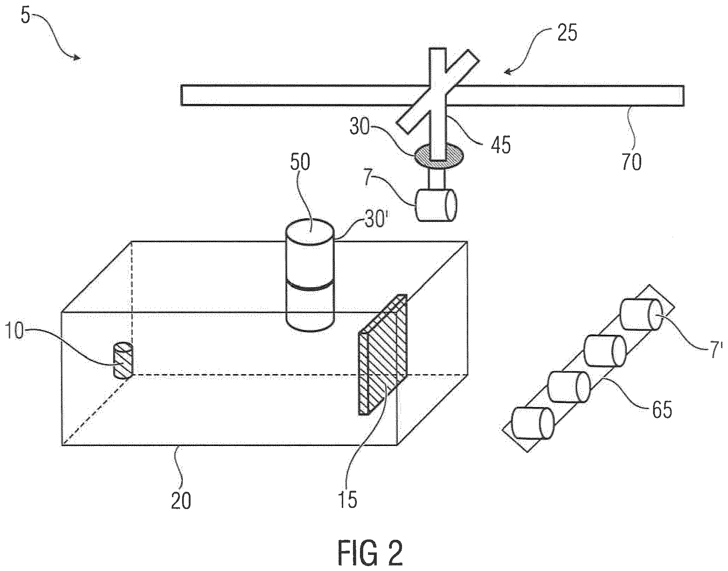

Das Handlingsystem, welches beispielsweise durch einen handelsüblichen Roboter 25 oder aus Linearachsen (vgl. Fig. 2) in Kombination mit Rotationseinheiten realisiert werden kann, wird in einem bevorzugten Ausführungsbeispiel direkt zur Bauteilmanipulation für die Messdatenerfassung verwendet und macht somit ein Manipulationssystem für das zu prüfende Bauteil 7 überflüssig bzw. ersetzt dasselbe. Alternativ oder ergänzend kann auch die Strahlungsquelle und der Strahlungsdetektor um das Bauteil rotieren, wie es beispielsweise (medizinische) Gantry-Systeme zeigen. Das Handlingsystem 25 steht darüber hinaus nicht in der Strahlenschutzkabine 20, sondern außerhalb derselben. Die Zuführung des Bauteils 7 erfolgt durch Eintauchen des Roboters 25 in die Öffnung 50 der Strahlenschutzkabine 20. Der Strahlenschutz mit der Strahlenaustrittsverhinderungseinrichtung 30 kann durch eine Vorrichtung am Handlingsystem, beispielsweise dem Roboterarm 45 oder durch einen Strahlenschutztunnel (vgl. Fig. 2) sichergestellt werden. In einem Ausführungsbeispiel handelt es sich bei der Strahlenaustrittsverhinderungseinrichtung 30 um einen Deckel, der in seiner Ausführung größer als die Öffnung 50 ist und beispielsweise aus dem gleichen Material, aus dem auch die Strahlenschutzkabine realisiert wurde, gefertigt ist. Darüber hinaus kann die Strahlenaustrittsverhinderungseinrichtung bzw. der Deckel 30 auch ein von der Strahlenschutzkabine 20 abweichendes Material aufweisen, das ebenfalls den Austritt von elektromagnetischer Strahlung verhindert.

Optional können die zu prüfenden Bauteile 7, 7' über eine Zuführeinrichtung 65, beispielsweise ein Förderband angeliefert werden oder manuell an einer Position außerhalb der Bildaufnahmevorrichtung bereitgestellt werden. In Kombination mit der Zuführeinrichtung kann die Bildaufnahmevorrichtung eine Inline-Bauteilprüfanlage bilden, um der Bildaufnahmevorrichtung zu ermöglichen, computertomographische Abbilder einer Mehrzahl von Bauteilen sequenziell und automatisiert zu erstellen. In anderen Worten können gefertigte Bauteile in einer Produktionsstraße bzw. einer Fertigungslinie automatisiert zugeführt werden. Die Bildaufnahmevorrichtung kann eine stichprobenartige oder vollständige Prüfung von einer Mehrzahl von Bauteilen durchführen, wobei die Mehrzahl der Bauteile nacheinander der Bildaufnahmevorrichtung zugeführt werden. Für die Messdatenerfassung kann sich das Handlingsystem 25, das bereitgestellte Bauteil 7 abholen und über die Öffnung 50 in die Strahlenschutzkabine 20 eintauchen, in der sich das Detektorsystem 15 und die Strahlungsquelle 10 befinden.

Fig. 2 zeigt eine schematische Darstellung der Bildaufnahmevorrichtung mit einem von Fig. 1 abweichenden Roboter 25 sowie einen Strahlenschutztunnel 30' als Strahlenaustrittsverhinderungseinrichtung. Ergänzend kann ein erhöhter Strahlenschutz erreicht werden, indem der in Fig. 1 beschriebenen Deckel 30 den Strahlenschutztunnel zusätzlich abdeckt.

Der Roboter 25 bzw. das Handlingsystem ist hier als eine Kombination von Linearachsen gezeigt, wobei eine Linearachse 70 die Zuführung der Bauteile 7, 7' über die Öffnung 50 ausführt. Der Roboterarm 45 kann ebenfalls als Linearachse ausgebildet sein, die das Eintauchen des Bauteils 7, 7' durch die Öffnung und die Strahlenschutzkabine ermöglicht.

Wie bereits hinsichtlich Fig. 1 beschrieben ist die Anordnung der Zuführeinrichtung 65 optional, kann jedoch in Kombination mit der Bildaufnahmevorrichtung 5 die Inline-Bauteilprüfanlage ausbilden.

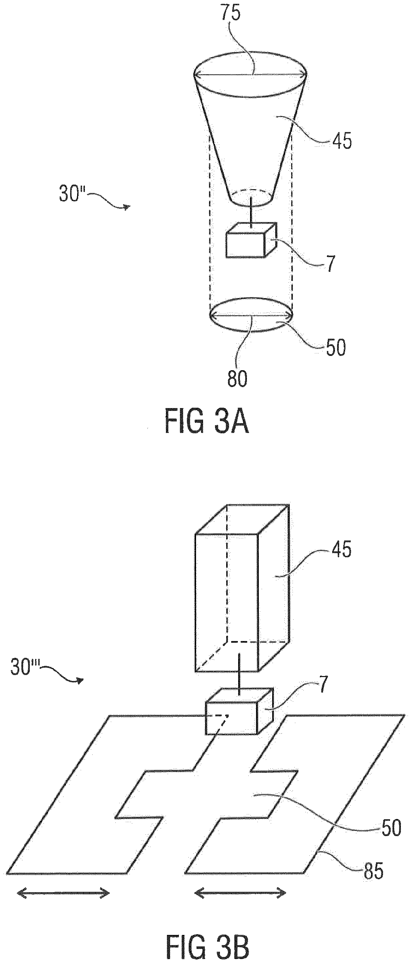

Fig. 3a bis 3f zeigen schematische Darstellungen einer alternativen Realisierung der Strahlenaustrittsverhinderungseinrichtung. Fig. 3a zeigt einen trichterförmigen bzw. konisch zulaufenden Roboterarm 45 mit einem Bauteil 7, das in die Öffnung 50 eintauchen kann. Ein maximaler Durchmesser 75 des Roboterarms ist größer als ein Durchmesser 80 der Öffnung 50, wodurch die Öffnung den Roboterarm hermetisch umschließen kann, wenn das Bauteil 7 in die Strahlenschutzkabine eingetaucht ist.

Fig. 3b zeigt eine alternative Anordnung der Strahlenaustrittsverhinderungseinrichtung. Hierbei kann die Öffnung 50 während des Eintretens des Bauteils 7 in die Strahlenschutzkabine vergrößert werden, so dass der Roboterarm das Bauteil 7 problemlos in die Strahlenschutzkabine eintauchen kann. So kann ein zusätzlicher Antrieb an der Öffnung bzw. der Strahlenschutzkabine, welcher nicht im Roboter selbst befestigt ist, den Roboterarm automatisiert umschließen. Dies kann beispielsweise eine Schiebetür 85 mit Aussparungen für den Roboterarm sein. Nach dem Eintauchen des Bauteils in die Strahlenschutzkabine kann die Öffnung wieder verkleinert werden, so dass die Öffnung den Roboterarm hermetisch umschließt.

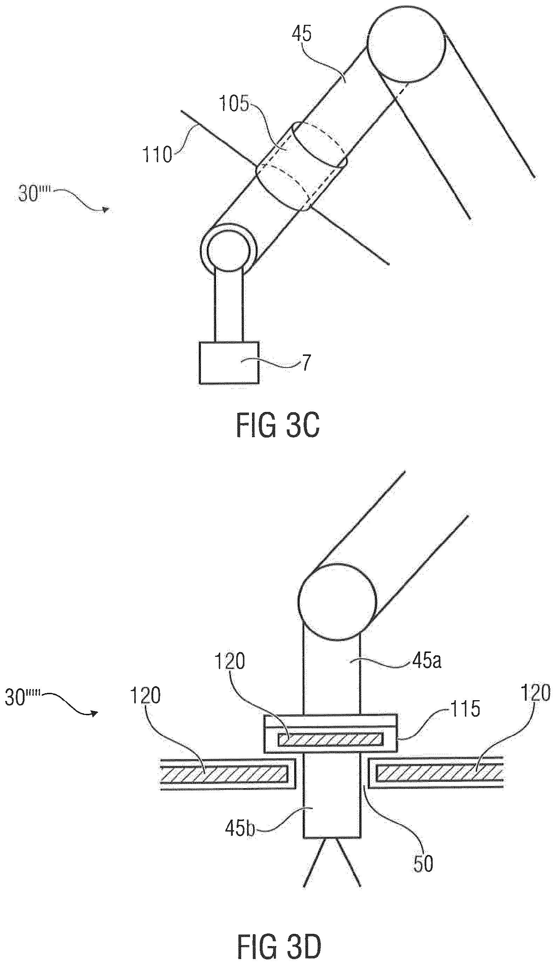

Fig. 3c zeigt die Strahlenaustrittsverhinderungseinrichtung 30"", die als Kragen ausgebildet ist. So kann ein Schlauch 105 den Roboterarm 45 umschließen, wobei der Schlauch 105 beispielsweise mittels eines Kragens 110 an der Öffnung der Strahlenschutzkabine (hier nicht gezeigt) befestigt wird. Schlauch und Krempe können Blei oder einen anderen Stoff aufweisen, der ein Austreten der elektromagnetischen Strahlung aus der Strahlenschutzkabine verhindert.

Fig. 3d zeigt die Strahlenaustrittsverhinderungseinrichtung 30'"", die durch einen Zwischenflansch 115 realisiert ist. Der Zwischenflansch kann einen geteilten Roboterarm 45a, 45b verbinden und die Öffnung 50 strahlungsdicht verschließen. Die Strahlenschutzkabine und/oder der Zwischenflansch 115 weisen beispielsweise Blei auf, um ein Austreten der elektromagnetischen Strahlung aus der Strahlenschutzkabine zu verhindern. Die Einzelteile sind jeweils demontierbar, jedoch im Betrieb strahlenundurchlässig miteinander verbunden.

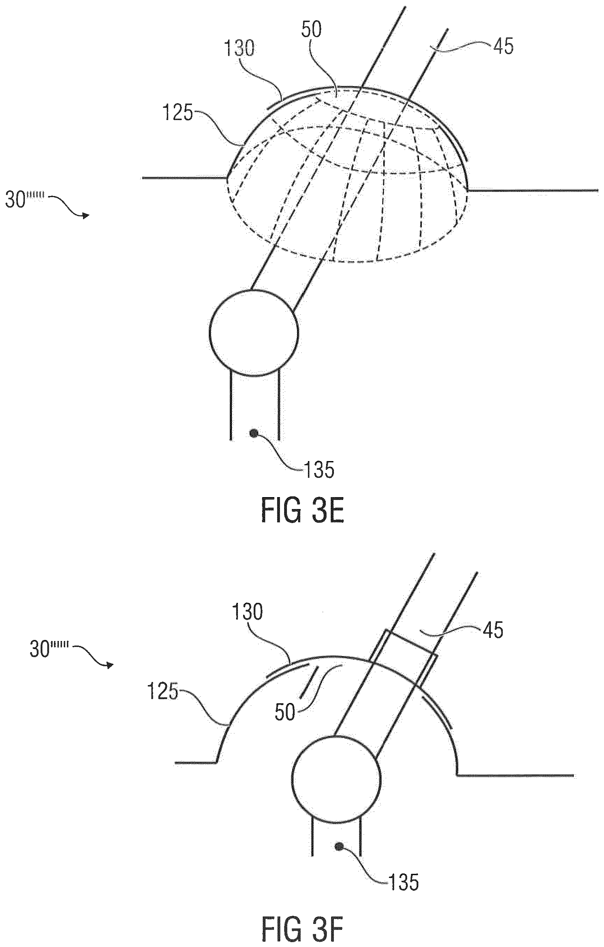

Fig. 3e und 3f zeigen die Strahlenaustrittsverhinderungseinrichtung 30""", wobei die Öffnung 50 in einer Kuppel 125 bzw. einem Dom ausgebildet ist. Der Roboterarm 45 weist eine Abdeckvorrichtung 130, die Strahlenaustrittsverhinderungseinrichtung ausbildet. Die Abdeckvorrichtung 130 umschließt die Kuppel 125 zu einem Teil und verschließt somit die Öffnung 50 in der Kuppel 125. Fig. 3f zeigt eine zweidimensionale Ansicht der dreidimensionalen Abbildung in Fig. 3e. Das gezeigte Ausführungsbeispiel ist vorteilhaft, da der Roboterarm 45 in der Öffnung 50 nicht fest eingeschlossen ist sondern zumindest zu einem gewissen Grad frei beweglich ist. Somit kann eine Bewegung um bzw. eine Orientierung hinsichtlich eines Tool Central Points 135 (TCP, dt.: Referenzpunkt am Roboterarm) durchgeführt werden. Beispielsweise kann eine Translationsbewegung des Roboterarms nötig sein, um eine rotatorische Bewegung des Bauteils durchzuführen. Diese translatorische Bewegung kann durch den Spielraum des Roboterarms in der Öffnung 50 durchgeführt werden. Ferner ist es möglich, anstelle eines Sicherheitsschalters, der den strahlendichten Verschluss der Öffnung 50 anzeigt, eine sichere Steuerung zur Absicherung verwendet, die Anhand der Roboterposition den Verschluss der Öffnung 50 ermittelt.

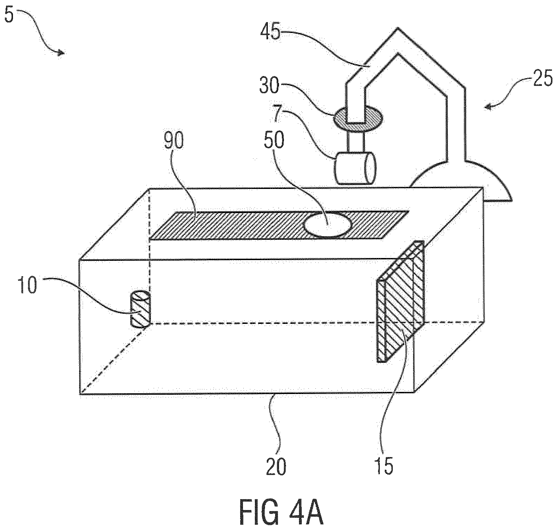

Fig. 4a zeigt eine schematische Darstellung der Bildaufnahmevorrichtung 5 mit einer Führung 90 gemäß einem Ausführungsbeispiel. Die Führung 90 ist ausgebildet, die Öffnung 50 der Strahlenschutzkabine 20 entlang einer Achse zwischen der Strahlungsquelle und dem Strahlungsdetektor durch den Roboterarm oder einen separaten Antrieb verschiebbar zu machen. Die Führung 90 (manuell oder automatisiert) kann die Öffnung in der Strahlenschutzkabine 20 für Handlingsysteme 25 erweitern, um die Aufnahmetrajektorie zu optimieren. Wird die Führung, die in Fig. 4a gezeigt ist, längs der Strahlrichtung ausgeführt, können unterschiedliche Vergrößerungen von dem Bauteil realisiert werden. Wird durch die Vergrößerung eine verbesserte Ausnutzung der Detektorfläche des Strahlungsdetektors erreicht, kann somit auch die Auflösung der computertomographischen Abbildung verbessert werden. Ist die Führung manuell ausgeführt, kann der Roboterarm 45 in die Öffnung eintauchen und die Öffnung 50 entlang der Führung 90 selbstständig bewegen. Alternativ oder ergänzend kann die Führung auch automatisiert ausgebildet sein, d.h. dass Führung einen separaten Antrieb aufweisen kann, der die Öffnung verschiebt. Die Verschiebung kann ausgeführt werden, sobald der Roboterarm in die Öffnung 50 eingetaucht ist und den Roboterarm durch die Verschiebung mitführt. Hierfür kann der Roboter 25 in einen manuellen Modus versetzt werden, so dass dieser durch den separaten Antrieb bewegt werden kann.

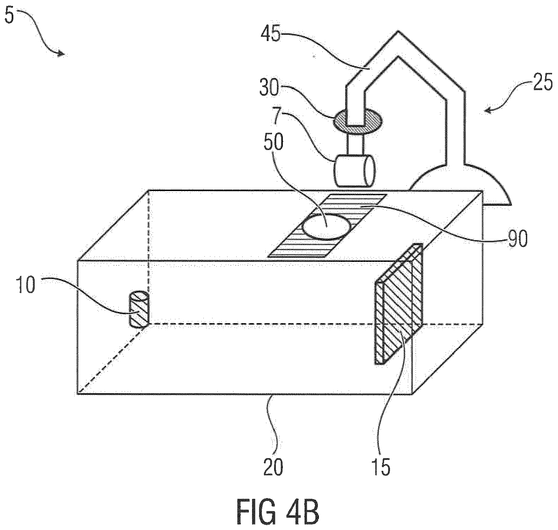

Fig. 4b zeigt eine schematische Darstellung der Bildaufnahmevorrichtung 5 gemäß der Darstellung in Fig. 4a, wobei die Führung 90 senkrecht zu der Achse zwischen der Strahlungsquelle und dem Strahlungsdetektor angeordnet und verschiebbar ist. Diese Anordnung ermöglicht es größere Objekte über ein virtuell breiteres Detektorsystem zu erfassen. Hierbei können mehrere computertomografischen Abbilder von jeweils einem Teil des Bauteils erstellt werden und beispielsweise mittels eines Signalprozessors zu einem einzigen computertomografischen Abbild des Bauteils kombiniert bzw. verrechnet werden. Das einzige computertomografische Abbild kann dann eine Größe aufweisen, die der Detektor sonst nicht darzustellen vermag.

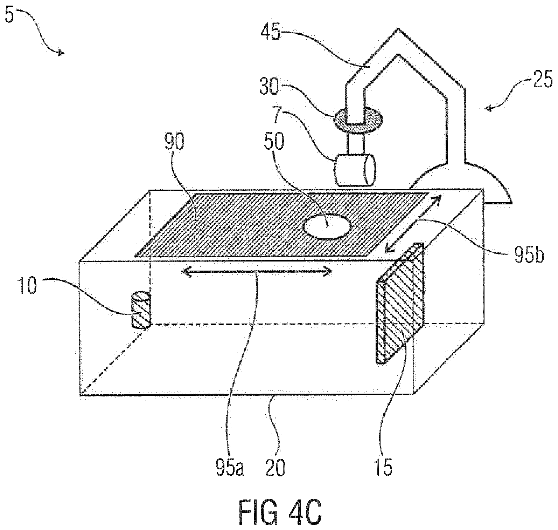

Fig. 4c zeigt eine schematische Darstellung der Bildaufnahmevorrichtung 5, wobei die Führung 90 eine Kombination der Führungen darstellt, wie sie in Fig. 4a und Fig. 4b gezeigt sind. In anderen Worten kann die Öffnung 50 in der Führung 90 beliebig entlang der Achse 95a zwischen der Strahlungsquelle 10 und dem Strahlungsdetektor 15 oder entlang der Achse 95b, die senkrecht zu der Achse 95a verläuft, durch den Roboterarm oder einen separaten Antrieb verschoben werden.

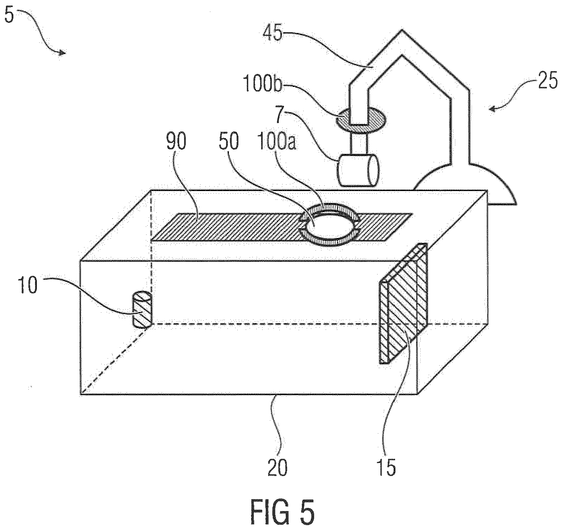

Fig. 5 zeigt eine schematische Darstellung der Bildaufnahmevorrichtung 5 mit einem Fixierungsmechanismus 100a, 100b gemäß einem Ausführungsbeispiel. Der Fixierungsmechanismus ermöglicht die mechanische Verbindung der Öffnung 50 mit dem Roboterarm 45. Der Fixierungsmechanismus kann in Ausführungsbeispielen elektrisch, magnetisch oder mittels Druckluft ausgebildet sein. Ebenso ist eine Kombination der genannten Mechanismen möglich. Ein Teil des Fixierungsmechanismus 100a ist an der Öffnung 50 angeordnet und ein zweiter Teil des Fixierungsmechanismus 100b ist an dem Roboterarm 45 angeordnet. Der Fixierungsmechanismus 100b kann auch in einer Kombination mit dem Deckel 30 als Strahlenaustrittsverhinderungseinrichtung ausgebildet sein. Der Fixierungsmechanismus ermöglicht eine höhere Präzision des Roboterarms und damit des Bauteils 7 während dem Erstellen der computertomografischen Abbildung von dem Bauteil. Somit können Roboter 25 eingesetzt werden, die preiswerter sind und eine vergleichsweise hohe Positioniergenauigkeit aufweisen. Ferner kann der Roboterarm 45 stabilisiert werden, beispielsweise wenn das Bauteil rotatorisch im Strahlungsweg der elektromagnetischen Strahlung bewegt wird, wenn das computertomografische Abbild von dem Bauteil erstellt wird. Gemäß einem Ausführungsbeispiel kann die Führung 100a auch von einem separaten Antrieb gedreht bzw. rotatorisch angetrieben werden, so dass die Rotation des Bauteils 7 von der Führung 100a ausgeführt wird und nicht aktiv im Roboter 25.

Wie beschrieben kann die Führung 100a, 100b die Positioniergenauigkeit des Bauteils 7 während der Aufnahme des computertomografischen Abbilds erhöhen. Damit geht auch eine Optimierung der Auflösung einher, da beispielsweise Unschärfen durch eine Ungenauigkeit bei der Rotation des Bauteils vermieden werden. Wie beschrieben werden Handlingsysteme 25 nicht nur für das Be- und Entladen, sondern auch für die Bauteilmanipulation während der Messdatenerfassung verwendet. Diese beschriebenen Handlingsysteme 25, welche entweder durch einen handelsüblichen Roboter oder aus Linearachsen in Kombination mit Rotationseinheiten realisiert werden können, müssen für eine hochauflösende Messdatenerfassung mit einer entsprechend der gewünschten Auflösung notwendigen Positioniergenauigkeit (absolut und/oder relativ, Wiederholgenauigkeit) realisiert sein. Um diese Beschränkung hinsichtlich des Handlingsystems 25 aufzulösen, kann die zuvor beschriebene Führung um eine Arretierung bzw. einen Fixiermechanismus 100a, 100b erweitert werden. Die Arretierung in Kombination mit der Führung 90 kann, sobald das Handlingsystem 25 in Messposition ist, die exakte Nachpositionierung mit der entsprechend der gewünschten Auflösung notwendigen Positioniergenauigkeit übernehmen.

Für eine erhöhte Positioniergenauigkeit kann gemäß einem Ausführungsbeispiel ferner ein Wegmesssystem in der Bildaufnahmevorrichtung eingebaut sein. Das Wegmesssystem kann eine Position des Bauteils im Roboterarm exakt bestimmen. Das Wegmesssystem kann ferner mit dem Roboterarm oder mit einem separaten Antrieb, der den Roboterarm führt, gekoppelt sein. Eine Steuereinheit kann, basierend auf der Wegmessung des Wegmesssystems, eine Steuerung bzw. eine Regelung des Bauteils in der Strahlenschutzkabine durchführen. Das beschriebene Wegmesssystem kann hochpräzise ausgeführt sein und die Präzision beispielsweise des Roboterarms 45 übersteigen.

Für die Erstellung der computertomografischen Abbilder kann gemäß Ausführungsbeispielen Röntgenstrahlung oder Gammastrahlung verwendet werden. Ferner kann die Bildaufnahmevorrichtung einen Bildverarbeitungsprozessor aufweisen, der ausgebildet ist, Störstellen in dem Bauteil basierend auf dem computertomografischen Abbild zu erkennen und anzuzeigen. Die beschriebenen Ausführungsbeispiele sind vorteilhaft, da neben geringeren Maschinenkosten eine Taktzeitverkürzung und dem damit erhöhten Durchsatz der Prüfmaschine durch ein optimiertes Handling der Bauteile erreicht werden kann. Dies wird erzielt, indem die Übergabekette der Bauteile verkürzt wird und bisher benötigte Maschinenkomponenten entfallen können. Weitere Vorteile bestehen in dem verringerten Platzbedarf der Maschine und den stark reduzierten Strahlenschutzmaßnahmen, da der Roboter oder andere Handlingkomponenten außerhalb der Kabine platziert sind. Die Wartung oder der Austausch dieser Komponenten wird damit auch vereinfacht, da diese offen platziert werden können. Durch die Arretierung wird gleichzeitig eine hochauflösende CT-Aufnahme möglich, für welche die Positioniergenauigkeit von Industrierobotern ohne diese Zusatzmaßnahme bisher nicht ausreichte.

Ferner zeigen Ausführungsbeispiele, dass die Zeitdauer für das Bauteilhandling bzw. für das Be- und Entladen der Strahlenschutzkabine durch die Erfindung gegenüber herkömmlichen Systemen signifikant reduziert werden kann, um den Durchsatz der Prüfmaschine zu erhöhen. Gleichzeitig kann die Nutzung der beschriebenen Methoden bzw. Ausführungsbeispiele die Herstellungskosten der Prüfmaschine signifikant reduzieren, da zum einen bewegliche Komponenten entfallen und die kostenintensiven Strahlenschutzmaßnahmen damit erstmals auf ein Minimum reduziert werden können.

Die Bildaufnahmevorrichtung kann beispielsweise zur 3D Röntgencomputertomografie für die zerstörungsfreie Werkstoffprüfung (zfP), z.B. an Gussteilen (z.B. Leichtmetall, Kunststoffe), Verbundwerkstoffen (z.B. carbonfaserverstärkter Kunststoff (CFK), glasfaserverstärkter Kunststoff (GFK)), geschmiedete, gesinterte oder montierte Bauteile oder Bauteilgruppen für die Qualitätssicherung eingesetzt werden. Ferner beschreiben Ausführungsbeispiele ein Handlingsystem, welches beispielsweise durch einen handelsüblichen Roboter oder aus Linearachsen in Kombination mit Rotationseinheiten realisiert werden kann. Das Handlingsystem kann direkt zur Bauteilmanipulation für die Messdatenerfassung in der Computertomografie verwendet werden und macht somit ein Manipulationssystem für das zu prüfende Bauteil überflüssig. Das Handlingsystem steht darüber hinaus nicht in der Strahlenschutzkabine, sondern außerhalb. Die Zuführung erfolgt dabei durch Eintauchen des Roboters in eine Öffnung in der Strahlenschutzkabine. Der Strahlenschutz wird beispielsweise durch eine Vorrichtung am Handlingsystem oder durch einen Strahlenschutztunnel sichergestellt. Weitere Varianten beschreiben Einrichtungen für ein hochauflösenden CT als auch weitere Einrichtungen bzw. Führungen für eine optimierte Aufnahmetrajektorie.

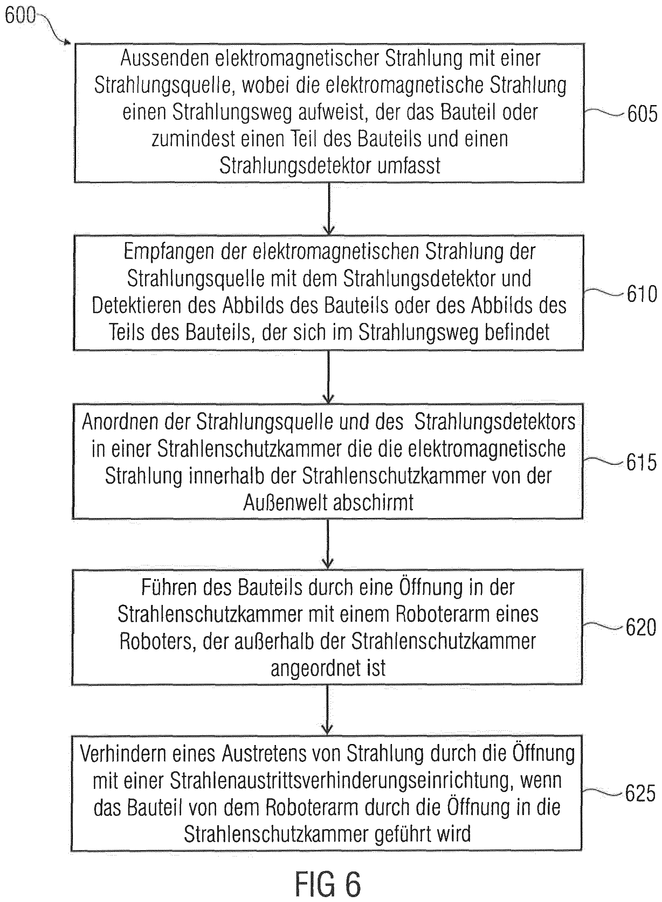

Fig. 6 zeigt ein schematisches Flussdiagramm für ein Verfahren 600 zum automatischen Erstellen eines computertomografischen Abbilds von einem Bauteil mit einer Bildaufnahmevorrichtung. Das Verfahren 600 umfasst einen Schritt 605 "Aussenden elektromagnetischer Strahlung mit einer Strahlungsquelle, wobei die elektromagnetische Strahlung einen Strahlungsweg aufweist, der das Bauteil oder zumindest einen Teil des Bauteils und einen Strahlungsdetektor umfasst", einen Schritt 610 "Empfangen der elektromagnetischen Strahlung der Strahlungsquelle mit dem Strahlungsdetektor und Detektieren des Abbilds des Bauteils oder des Abbilds des Bauteils, der sich im Strahlungsweg befindet", einem Schritt 615 "Anordnen der Strahlungsquelle und des Strahlungsdetektors in einer Strahlenschutzkabine, die die elektromagnetische Strahlung innerhalb der Strahlenschutzkabine von der Außenwelt abschirmt", einem Schritt 620 "Führen des Bauteils durch eine Öffnung in der Strahlenschutzkabine mit einem Roboterarm eines Roboters, der außerhalb der Strahlenschutzkabine angeordnet ist" und einem Schritt 625 "Verhindern eines Austretens von Strahlung durch die Öffnung mit einer Strahlenaustrittsverhinderungseinrichtung, wenn das Bauteil von dem Roboterarm durch die Öffnung der Strahlenschutzkabine geführt ist".

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Bildaufnahmevorrichtung (5) zum automatischen Erstellen eines computertomografischen Abbilds von einem Bauteil (7) mit:
einer Strahlungsquelle (10), die ausgebildet ist, elektromagnetische Strahlung (35) auszusenden, wobei die elektromagnetische Strahlung einen Strahlungsweg (40) aufweist, der das Bauteil oder zumindest ein Teil des Bauteils (7) und einen Strahlungsdetektor (15) umfasst;
dem Strahlungsdetektor (15), der ausgebildet ist, die elektromagnetische Strahlung (35) der Strahlungsquelle (10) zu empfangen und das Abbild des Bauteils (7) oder das Abbild des Teils des Bauteils, der sich im Strahlungsweg (40) befindet, zu detektieren;
einer Strahlenschutzkabine (20), in der die Strahlungsquelle (10) und der Strahlungsdetektor (15) angeordnet sind und die ausgebildet ist, die elektromagnetische Strahlung (35) innerhalb der Strahlenschutzkabine von der Außenwelt abzuschirmen;
einem Roboter (25), der außerhalb der Strahlenschutzkabine angeordnet ist, wobei ein Roboterarm (45) des Roboters ausgebildet ist, das Bauteil (7) durch eine Öffnung (50) in die Strahlenschutzkabine zu führen;
einer Strahlenaustrittsverhinderungseinrichtung (30, 30', 30", 30"', 30"", 30'"", 30"""), die ausgebildet ist, ein Austreten von Strahlung (35) durch die Öffnung (50) zu verhindern, wenn das Bauteil (7) von dem Roboterarm (45) durch die Öffnung in die Strahlenschutzkabine (20) geführt ist.

2. Bildaufnahmevorrichtung (5) gemäß Anspruch 1, wobei der Roboterarm (45) ausgebildet ist, das Bauteil (7) für die Dauer des Erstellens eines computertomografischen Abbilds an einer vorbestimmten Position in dem Strahlungsweg zu positionieren.

3. Bildaufnahmevorrichtung (5) gemäß einem der vorherigen Ansprüche, wobei der Roboterarm die Strahlenaustrittsverhinderungseinrichtung aufweist, die ausgebildet ist, die Öffnung der Strahlenschutzkabine zu verschließen, wenn das Bauteil von dem Roboterarm in die Strahlenschutzkabine geführt ist und die elektromagnetische Strahlung innerhalb der Strahlenschutzkabine von der Außenwelt abzuschirmen.

4. Bildaufnahmevorrichtung (5) gemäß einem der vorherigen Ansprüche, wobei die Öffnung (50) der Strahlenschutzkabine die Strahlenaustrittsverhinderungseinrichtung aufweist, die ein Strahlenschutztunnel (30') ist, wobei der Strahlenschutztunnel ausgebildet ist, die elektromagnetische Strahlung (35) innerhalb der Strahlenschutzkabine von der Außenwelt abzuschirmen.

5. Bildaufnahmevorrichtung (5) gemäß einem der vorherigen Ansprüche, wobei die Öffnung (50) die Strahlenaustrittsverhinderungseinrichtung (30", 30'") aufweist und ausgebildet ist, den Roboterarm (45) während des Betriebs der Strahlungsquelle (10) hermetisch zu umschließen und die elektromagnetische Strahlung innerhalb der Strahlenschutzkabine (20) von der Außenwelt abzuschirmen.

6. Bildaufnahmevorrichtung (5) gemäß einem der vorherigen Ansprüche, wobei um die Öffnung (50) in einer Kuppel (125) ausgebildet ist und wobei die der Roboterarm (45) die Strahlenaustrittsverhinderungseinrichtung aufweist, die ausgebildet ist, die Kuppel zu einem Teil zu umschließen und die Öffnung in der Kuppel zu verschließen.

7. Bildaufnahmevorrichtung (5) gemäß einem der vorherigen Ansprüche, wobei der Roboterarm (45) ausgebildet ist, das Bauteil (7) rotatorisch im Strahlungsweg (40) der elektromagnetischen Strahlung (35) zu bewegen.

8. Bildaufnahmevorrichtung (5) gemäß einem der vorherigen Ansprüche, wobei die Öffnung (50) der Strahlenschutzkabine (20) und der Roboterarm (45) einen Fixierungsmechanismus (100a, 100b) aufweisen, der ausgebildet ist, die Öffnung (50) und den Roboterarm (45) mechanisch miteinander zu verbinden.

9. Bildaufnahmevorrichtung (5) gemäß Anspruch 8, wobei der Fixierungsmechanismus (100a, 100b) elektrisch, mechanisch oder mittels Druckluft ausgebildet ist.

10. Bildaufnahmevorrichtung (5) gemäß einem der vorherigen Ansprüche, die eine Führung (90) aufweist, durch die die Öffnung (50) der Strahlenschutzkabine entlang einer Achse (95a) zwischen der Strahlungsquelle und dem Strahlungsdetektor oder senkrecht (95b) zu der Achse (95a) zwischen der Strahlungsquelle und dem Strahlungsdetektor durch den Roboterarm oder einen separaten Antrieb verschiebbar ist.

11. Bildaufnahmevorrichtung (5) gemäß Anspruch 10, die ein Wegmesssystem aufweist, das ausgebildet ist, eine Position des Bauteils (7) an dem Roboterarm (45) exakt zu bestimmen.

12. Bildaufnahmevorrichtung (5) gemäß Anspruch 11,
wobei das Wegmesssystem mit dem Roboterarm oder mit einem separaten Antrieb, der den Roboterarm führt, gekoppelt ist;
wobei die Bildaufnahmevorrichtung eine Steuereinheit aufweist, die ausgebildet ist, den Roboterarm oder den separaten Antrieb basierend auf einer Wegmessung des Wegmesssystems zu steuern und das Bauteil exakt in der Strahlenschutzkabine zu positionieren.

13. Bildaufnahmevorrichtung (5) gemäß Anspruch 11,
mit einem Signalprozessor, der ausgebildet ist, eine Mehrzahl von mit dem Strahlungsdetektor (15) detektierten Abbildern des Bauteils (7) oder eine Mehrzahl von Abbildern eines Teils des Bauteils, der sich im Strahlungsweg (40) befindet zu erhalten und das computertomographische Abbild des Bauteils zu erstellen;
wobei der Signalprozessor ausgebildet ist, basierend auf einer Wegmessung des Wegmesssystems die Position des Bauteils während der Detektion der Mehrzahl der Abbilder des Bauteils oder der Mehrzahl von Abbildern eines Teils des Bauteils, der sich im Strahlungsweg (40) befindet, zu erhalten und mit einer vorbestimmten Position des Bauteils oder des Teils des Bauteils, der sich im Strahlungsweg befindet, zu vergleichen, wobei der Signalprozessor das computertomographische Abbild des Bauteils unter Berücksichtigung des Vergleichs erstellt.

14. Bildaufnahmevorrichtung (5) gemäß einem der vorherigen Ansprüche, wobei die Strahlungsquelle ausgebildet ist, Röntgenstrahlung oder Gammastrahlung auszusenden.

15. Bildaufnahmevorrichtung (5) gemäß einem der vorherigen Ansprüche, mit einem Bildverarbeitungsprozessor, der ausgebildet ist, Störstellen in dem Bauteil basierend auf dem computertomografischen Abbild des Bauteils zu erkennen und anzuzeigen.

16. Inline-Bauteilprüfanlage mit:
einer Bildaufnahmevorrichtung (5) gemäß einem der Ansprüche 1 bis 15;
eine Zuführeinrichtung, die ausgebildet ist, die Bauteile (7, 7') der Bildaufnahmevorrichtung zuzuführen;
wobei die Bildaufnahmevorrichtung ausgebildet ist, computertomografische Abbilder von einer Mehrzahl von Bauteilen sequenziell und automatisiert zu erstellen.

17. Verfahren (600) zum automatischen Erstellen eines computertomografischen Abbilds von einem Bauteil mit einer Bildaufnahmevorrichtung mit folgenden Schritten:
Aussenden elektromagnetischer Strahlung mit einer Strahlungsquelle, wobei die elektromagnetische Strahlung einen Strahlungsweg aufweist, der das Bauteil oder zumindest einen Teil des Bauteils und einen Strahlungsdetektor umfasst;
Empfangen der elektromagnetischen Strahlung der Strahlungsquelle mit dem Strahlungsdetektor und detektieren des Abbilds des Bauteils oder des Teils des Bauteils, der sich im Strahlungsweg befindet;
Anordnen der Strahlungsquelle und des Strahlungsdetektors in einer Strahlenschutzkabine, die die elektromagnetische Strahlung innerhalb der Strahlenschutzkabine von der Außenwelt abschirmt;
Führen des Bauteils durch eine Öffnung in der Strahlenschutzkabine mit einem Roboterarm eines Roboters, der außerhalb der Strahlenschutzkabine angeordnet ist;
Verhindern eines Austretens von Strahlung durch die Öffnung mit einer Strahlenaustrittsverhinderungseinrichtung, wenn das Bauteil von dem Roboterarm durch die Öffnung in die Strahlenschutzkabine geführt ist.

## Claims

1. Image capturing device (5) for automatically generating a computer-tomographic image of a member (7), comprising:
a radiation source (10) that is configured to emit electromagnetic radiation (35), wherein the electromagnetic radiation comprises a radiation path (40) including the member or at least part of the member (7) and a radiation detector (15);
the radiation detector (15) that is configured to receive the electromagnetic radiation (35) of the radiation source (10) and to detect the image of the member (7) or the image of the part of the member which is within the radiation path (40);
a radiation protection cabin (20) where the radiation source (10) and the radiation detector (15) are arranged and that is configured to shield the electromagnetic radiation (35) within the radiation protection cabin from the outside;
a robot (25) that is arranged outside the radiation protection cabin, wherein a robot arm (45) of the robot is configured to guide the member (7) through an opening (50) into the radiation protection cabin;
a radiation leakage prevention means (30, 30', 30", 30"', 30"", 30'"", 30""") that is configured to prevent leakage of radiation (35) through the opening (50) when the member (7) is guided through the opening into the radiation protection cabin (20) by the robot arm (45).

2. Image capturing device (5) according to claim 1, wherein the robot arm (45) is configured to position the member (7) at a predetermined position in the radiation path for the duration of generating a computer-tomographic image.

3. Image capturing device (5) according to one of the proceeding claims, wherein the robot arm comprises the radiation leakage prevention means that is configured to close the opening of the radiation protection cabin when the member is guided into the radiation protection cabin by the robot arm to shield the electromagnetic radiation within the radiation protection cabin from the outside.

4. Image capturing device (5) according to one of the preceding claims, wherein the opening (50) of the radiation protection cabin comprises the radiation leakage prevention means which is a radiation protection tunnel (30'), wherein the radiation protection tunnel is configured to shield the electromagnetic radiation (35) within the radiation protection cabin from the outside.

5. Image capturing device (5) according to one of the preceding claims, wherein the opening (50) comprises the radiation leakage prevention means (30", 30'") and is configured to hermetically enclose the robot arm (45) during the operation of the radiation source (10) and to shield the electromagnetic radiation within the radiation protection cabin (20) from the outside.

6. Image capturing device (5) according to one of the preceding claims, wherein the opening (50) is formed within a dome (125) and wherein the robot arm (45) comprises the radiation leakage prevention means that is configured to partly enclose the dome and to close the opening within the dome.

7. Image capturing device (5) according to one of the preceding claims, wherein the robot arm (45) is configured to move the member (7) rotationally in the radiation path (40) of the electromagnetic radiation (35).

8. Image capturing device (5) according to one of the preceding claims, wherein the opening (50) of the radiation protection cabin (20) and the robot arm (45) comprise a fixing mechanism (100a, 100b) that is configured to mechanically connect the opening (50) and the robot arm (45).

9. Image capturing device (5) according to claim 8, wherein the fixing mechanism (100a, 100b) is configured electrically, mechanically or by means of compressed air.

10. Image capturing device (5) according to one of the preceding claims comprising a guide (90) through which the opening (50) of the radiation protection cabin can be shifted along an axis (95a) between the radiation source and the radiation detector or perpendicular (95b) to the axis (95a) between the radiation source and the radiation detector by the robot arm or a separate drive.

11. Image capturing device (5) according to claim 10 comprising a displacement measurement system that is configured to exactly determine a position of the member (7) at the robot arm (45).

12. Image capturing device (5) according to claim 11,
wherein the displacement measurement system is coupled to the robot arm or to a separate drive guiding the robot arm;
wherein the image capturing device comprises a control unit that is configured to control the robot arm or the separate drive based on a displacement measurement of the displacement measurement system and to position the member exactly within the radiation protection cabin.

13. Image capturing device (5) according to claim 11,
comprising a signal processor that is configured to obtain a plurality of images of the member (7) detected by the radiation detector (15) or a plurality of images of a part of the member which is within the radiation path (40) and to generate the computer-tomographic image of the member;
wherein the signal processor is configured to obtain, based on a displacement measurement of the displacement measurement system, the position of the member during the detection of the plurality of images of the member or the plurality of images of a part of the member which is within the radiation path (40) and to compare the same with a predetermined position of the member or the part of the member which is within the radiation path, wherein the signal processor generates the computer-tomographic image of the member in consideration of the comparison.

14. Image capturing device (5) according to one of the preceding claims, wherein the radiation source is configured to emit X-radiation or gamma radiation.

15. Image capturing device (5) according to one of the preceding claims comprising an image processing processor that is configured to detect imperfections in the member based on the computer-tomographic image of the member and to indicate same.

16. Inline member test system, comprising:
an image capturing device (5) according to one of claims 1-15;
a supply means that is configured to supply the members (7, 7') to the image capturing device;
wherein the image capturing device is configured to generate computer-tomographic images of a plurality of members in a sequential and automated manner.

17. Method (600) for automatically generating a computer-tomographic image of a member with an image capturing device, comprising:
emitting electromagnetic radiation with a radiation source, wherein the electromagnetic radiation comprises a radiation path including the member or at least part of the member and a radiation detector;
receiving the electromagnetic radiation of the radiation source with the radiation detector and detecting the image of the member or the part of the member which is within the radiation path;
arranging the radiation source and the radiation detector within a radiation protection cabin that shields the electromagnetic radiation within the radiation protection cabin from the outside;
guiding the member through an opening in the radiation protection cabin with a robot arm of a robot that is arranged outside the radiation protection cabin;
preventing leakage of radiation through the opening with radiation leakage prevention means when the member is guided through the opening into the radiation protection cabin by the robot arm.

## Revendications

1. Dispositif d'imagerie (5) pour la génération automatique d'une image tomodensitométrique d'un composant (7), avec:
une source de rayonnement (10) qui est conçue pour émettre un rayonnement électromagnétique (35), où le rayonnement électromagnétique présente un trajet de rayonnement (40) qui comporte le composant ou au moins une partie du composant (7) et un détecteur de rayonnement (15);
le détecteur de rayonnement (15) qui est conçu pour recevoir le rayonnement électromagnétique (35) de la source de rayonnement (10) et pour détecter l'image du composant (7) ou l'image de la partie du composant qui se trouve sur le trajet de rayonnement (40);
une cabine de radioprotection (20) dans laquelle sont disposés la source de rayonnement (10) et le détecteur de rayonnement (15) et qui est conçue pour isoler du monde extérieur le rayonnement électromagnétique (35) à l'intérieur de la cabine de radioprotection ;
un robot (25) qui est disposé à l'extérieur de la cabine de radioprotection, où un bras de robot (45) du robot est conçu pour guider le composant (7) à travers une ouverture (50) dans la cabine de radioprotection;
un dispositif d'évitement de sortie de rayonnement (30, 30', 30", 30'", 30"" 30'"", 30""") qui est conçu pour éviter une sortie de rayonnement (35) à travers l'ouverture (50) lorsque le composant (7) est introduit par le bras de robot (45) à travers l'ouverture dans la cabine de radioprotection (20).

2. Dispositif d'imagerie (5) selon la revendication 1, dans lequel le bras de robot (45) est conçu pour positionner le composant (7), pendant la durée de la génération d'une image tomodensitométrique, à une position prédéterminée sur le trajet de rayonnement.

3. Dispositif d'imagerie (5) selon l'une des revendications précédentes, dans lequel le bras de robot présente le moyen d'évitement de sortie de rayonnement qui est conçu pour obturer l'ouverture de la cabine de radioprotection lorsque le composant est introduit par le bras de robot dans la cabine de radioprotection et pour isoler du monde extérieur le rayonnement électromagnétique à l'intérieur de la cabine de radioprotection.

4. Dispositif d'imagerie (5) selon l'une des revendications précédentes, dans lequel l'ouverture (50) de la cabine de radioprotection présente le moyen d'évitement de sortie de rayonnement qui est un tunnel de radioprotection (30'), où le tunnel de radioprotection est conçu pour isoler du monde extérieur le rayonnement électromagnétique (35) à l'intérieur de la cabine de radioprotection.

5. Dispositif d'imagerie (5) selon l'une des revendications précédentes, dans lequel l'ouverture (50) présente le moyen d'évitement de sortie de rayonnement (30", 30'") et est conçu pour entourer hermétiquement le bras de robot (45) pendant le fonctionnement de la source de rayonnement (10) et pour isoler du monde extérieur le rayonnement électromagnétique dans la cabine de radioprotection (20).

6. Dispositif d'imagerie (5) selon l'une des revendications précédentes, dans lequel l'ouverture (50) est formée dans une coupole (125), et dans lequel le bras de robot (45) présente le moyen d'évitement de sortie de rayonnement qui est conçu pour entourer en partie la coupole et pour obturer l'ouverture dans la coupole.

7. Dispositif d'imagerie (5) selon l'une des revendications précédentes, dans lequel le bras de robot (45) est conçu pour déplacer le composant (7) en rotation sur le trajet de rayonnement (40) du rayonnement électromagnétique (35).

8. Dispositif d'imagerie (5) selon l'une des revendications précédentes, dans lequel l'ouverture (50) de la cabine de radioprotection (20) et le bras de robot (45) présentent un mécanisme de fixation (100a, 100b) qui est conçu pour connecter mécaniquement l'ouverture (50) et le bras de robot (45) l'un à l'autre.

9. Dispositif d'imagerie (5) selon la revendication 8, dans lequel le mécanisme de fixation (100a, 100b) est réalisé de manière électrique, mécanique ou au moyen d'air comprimé.

10. Dispositif d'imagerie (5) selon l'une des revendications précédentes, qui présente un guide (90) par lequel l'ouverture (50) de la cabine de radioprotection peut être déplacée le long d'un axe (95a) entre la source de rayonnement et le détecteur de rayonnement ou perpendiculairement (95b) à l'axe (95a) entre la source de rayonnement et le détecteur de rayonnement par le bras de robot ou un entraînement séparé.

11. Dispositif d'imagerie (5) selon la revendication 10, qui présente un système de mesure de trajet qui est conçu pour déterminer exactement une position du composant (7) sur le bras de robot (45).

12. Dispositif d'imagerie (5) selon la revendication 11,
dans lequel le système de mesure de trajet est couplé au bras de robot ou à un entraînement séparé qui guide le bras de robot;
dans lequel le dispositif d'imagerie présente une unité de commande qui est conçue pour commander le bras de robot ou l'entraînement séparé sur base d'une mesure de trajet du système de mesure de trajet et pour positionner le composant exactement dans la cabine de radioprotection.

13. Dispositif d'imagerie (5) selon la revendication 11,
avec un processeur de signal qui est conçu pour recevoir une pluralité d'images du composant (7) détectées par le détecteur de rayonnement (15) ou une pluralité d'images d'une partie du composant qui se trouve sur le trajet de rayonnement (40) et pour générer l'image tomodensitométrique du composant;
dans lequel le processeur de signal est conçu pour obtenir, sur base d'une mesure de trajet du système de mesure de trajet, la position du composant pendant la détection de la pluralité d'images du composant ou de la pluralité d'images d'une partie du composant qui se trouve sur le trajet de rayonnement (40) et pour la comparer avec une position prédéterminée du composant ou de la partie du composant qui se trouve sur le trajet de rayonnement, dans lequel le processeur de signal génère l'image tomodensitométrique du composant en tenant compte de la comparaison.

14. Dispositif d'imagerie (5) selon l'une des revendications précédentes, dans lequel la source de rayonnement est conçue pour émettre des rayons X ou des rayons gamma.

15. Dispositif d'imagerie (5) selon l'une des revendications précédentes, avec un processeur de traitement d'image qui est conçu pour détecter et afficher des défauts du composant sur base de l'image tomodensitométrique du composant.

16. Installation de test de composant en ligne, avec:
un dispositif d'imagerie (5) selon l'une quelconque des revendications 1 à 15;
un dispositif d'alimentation configuré pour alimenter les composants (7, 7') vers le dispositif d'imagerie;
dans lequel le dispositif d'imagerie est configuré pour générer des images tomodensitométriques d'une pluralité de composants en séquence et de manière automatique.

17. Procédé (600) pour générer automatiquement une image tomodensitométrique d'un composant par un dispositif d'imagerie, aux étapes suivantes consistant à:
émettre un rayonnement électromagnétique par une source de rayonnement, où le rayonnement électromagnétique présente un trajet de rayonnement qui comporte le composant ou au moins une partie du composant et un détecteur de rayonnement;
recevoir le rayonnement électromagnétique de la source de rayonnement par le détecteur de rayonnement et détecter l'image du composant ou de la partie du composant qui se trouve sur le trajet de rayonnement;
disposer la source de rayonnement et le détecteur de rayonnement dans une cabine de radioprotection qui isole le rayonnement électromagnétique dans la cabine de radioprotection du monde extérieur;
guider le composant à travers une ouverture dans la cabine de radioprotection par un bras d'un robot qui est disposé à l'extérieur de la cabine de radioprotection;
éviter la production d'une sortie de rayonnement à travers l'ouverture par un dispositif d'évitement sortie de rayonnement lorsque le composant est guidé par le bras du robot à travers l'ouverture de la cabine de radioprotection.
